# EUROPEAN PATENT SPECIFICATION

(11) **EP 0 524 569 B1**
(45) Date of publication and mention of the grant of the patent: **14.06.1995**
(21) Application number: 92112332.9
(22) Date of filing: 20.07.1992
(51) Int. Cl.: B60N 2/54

(54) **Compact rear-mounted device for adjusting the suspension of driver's seats, particularly for agricultural machines**
Hinten angebrachte kompakte Vorrichtung zur Einstellung der Fahrersitzeaufhängung, insbesondere für Landwirtschaftsmaschinen
Dispositif compact monté à l'arrière pour le réglage de la suspension de siège de conducteur, notamment pour machines agricoles

(30) Priority: 26.07.1991 IT MO910116
(43) Date of publication of application: 27.01.1993
(73) Proprietor: GOLDONI S.p.A., I-41012 Migliarina di Carpi (Modena) (IT)
(72) Inventor: Goldoni, Leo, I-41012 Carpi (Modena) (IT)
(74) Representative: Modiano, Guido, Dr.-Ing.

(56) References cited:
- DE-B- 1 302 898
- FR-A- 2 596 969
- GB-A- 1 123 434
- GB-A- 2 120 931

## Description

The present invention relates to a compact rear-mounted device for adjusting the suspension of driver's seats, particularly for agricultural machines (see for example GB-A-2 120 931, corresponding to the preamble of claim 1).

In the field of the production of agricultural machines, one of the most important problems concerns the comfort which the drivers must enjoy in order to spend many working hours sitting in their seats.

The importance of this problem is so great that there are international statutory provisions which control the manufacture of seats; said provisions are very strict and deal with various parameters, such as for example the anatomical configuration of the seats, their suspension system and others.

The known art in the field of suspensions provides for a number of different solutions which have the purpose of varying the type of reaction to the load according to the physical characteristics (weight) of each driver.

In detail, seats are currently manufactured which entrust their suspension to rear-mounted structures, i.e. structures compactly located behind the driver's back, which offer the advantage of being very compact but do not allow, by themselves, to obtain the above described diversification of behavior and must be integrated, in order to obtain it, with a further parallelogram-like structure arranged below the horizontal portion of the seat, with an evident increase in bulk and production costs.

The technical aim of the present invention is to solve the above described problems of the known art by providing a compact rear-mounted device for adjusting the suspension of driver's seats, particularly for agricultural machines, which despite maintaining the compact rear-mounted structure allows to comfortably and very practically vary the stiffness of the suspension.

This aim is achieved by a compact rear-mounted device for adjusting the suspension of driver's seats, particularly for agricultural machines, as defined in claim 1.

Further aims, characteristics and advantages of the invention will become apparent from the description of a preferred but not exclusive embodiment of a compact rear-mounted device for adjusting the suspension of driver's seats, particularly for agricultural machines, illustrated only by way of non-limitative example in the accompanying drawings, wherein:
figure 1 is a lateral elevation sectional view of the device according to the present invention;
figure 2 is a rear elevation view thereof; and finally
figure 3 is an enlarged-scale detail view of the devices for moving the hook.

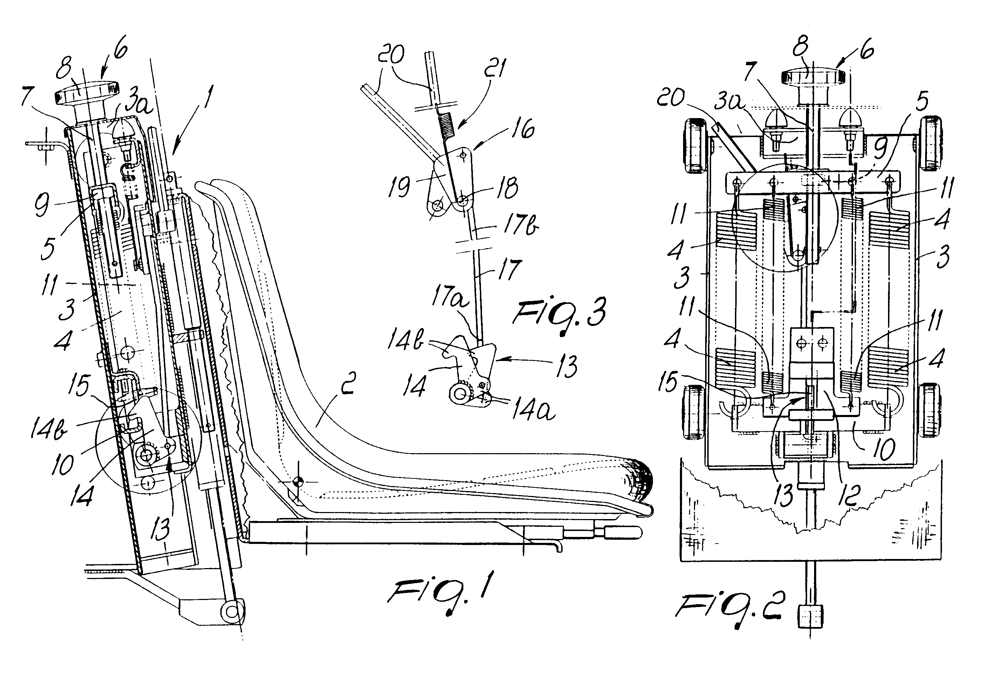

With particular reference to the above figures, the reference numeral 1 generally designates a compact rear-mounted device for adjusting the suspension of driver's seats 2 for agricultural machines, which is of the type composed of a main frame 3 which defines the rear-mounted unit and which can slide vertically in conventional related guides which are not illustrated in the drawings.

The sliding of the frame 3 occurs in contrast with a first pair of helical traction springs 4 whose upper ends are engaged with a first upper cross-member 5 which can be positioned at levels which can be set by virtue of related adjustment means 6.

Said adjustment means consist of at least one threaded pivot 7 which is provided, at its upper end, with an actuation knob 8 and which is rotatably accommodated in the upper portion 3a of the main frame 3; a complementarily threaded nut/sleeve 9 engages the lower end of the pivot 7 and is rigidly supported by said first cross-member 5.

The lower ends of the pair of springs 4 are in turn engaged with a second lower cross-member 10 which is parallel to said first cross-member 5 and which is rigidly associated with the seat 2.

The upper ends of a second additional pair of helical springs 11, whose stiffness is preferably different from that of the first pair 4, are also engaged with said first cross-member 5, while the opposite lower ends are in turn engaged with a third cross-member 12 which is parallel to the second one and which can be engaged therewith by virtue of related engagement elements 13.

Said engagement elements consist of at least one hook 14 whose base 14a is articulated to the second cross-member 10, while its upper pawl 14b is suitable to engage a corresponding slot 15 defined in the third cross-member 12.

The hook 14 is moved by means of actuation devices 16 which comprise an actuation rod 17 whose lower end 17a is articulated to the base 14a of the hook 14 and whose upper end 17b is articulated to the rotation fulcrum 18 of an eccentric element 19 which can be actuated so that it rotates by means of an actuation lever 20 which extends out of the device 1 and which acts with the interposition of elastic means 21 which are suitable to keep the eccentric element 19 in position.

The operation of the invention is as follows: in normal use, the seat 2 is sprung by virtue of the action of the first pair of springs 4, while the second pair 11 is prevented from intervening by acting on the lever 20, by means of which the devices 16 keep the pawl 14b extracted from the slot 15, thus making the third cross-member 12 independent of the second one 10.

When the weight of the driver varies as the drivers change, or if a same driver wishes to change the stiffness of the suspension, the devices 16 are actuated by acting on the lever 20 again and, by making the hook 14 rotate, allow the pawl 14b thereof to enter said slot 15, thus coupling the second cross-member 10 to the third one 12.

This produces the cooperation of the action of the first pair of springs 4 and of the second pair 11, stiffening, in other words, the elastic resistance of the device 1 without however requiring the provision, below the horizontal portion of the seat, of any further bulky device suitable to provide the required additional reaction to the weight applied to the seat 2.

In practice it has been observed that the invention thus described achieves the intended aim and objects and that by virtue of its intrinsic nature it allows, at the same time, to comply with the currently applicable national and international statutory provisions.

All the details may furthermore be replaced with other technically equivalent elements.

In practice, the materials employed, as well as the dimensions, may vary according to the scope of the invention as defined by the following claims the same holds in general for modifications and variations of which the invention herein conceived is susceptible.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Compact rear-mounted device (1) for adjusting the suspension of driver's seats (2), particularly for agricultural machines, comprising a main frame (3) which can slide vertically in related guides in contrast with a first pair of springs (4), the first ends of said first pair of springs (4) being engaged with a first upper cross-member (5) and the second ends of said first pair of springs (4) being engaged with a second cross-member (10) which is parallel to said first cross-member, characterized in that said first upper cross-member (5) can be arranged at adjustable levels by virtue of related adjustment means (6) and in that said second cross-member (10) is rigidly associated with the seat, the ends of at least one second additional pair of springs (11) being furthermore engaged with said first cross-member (5), said second pair of springs being parallel to said first springs, the opposite ends of said second pair of springs being engaged with a third cross-member (12) which is parallel to the second one and which can be engaged therewith by virtue of related engagement elements (13), the intervention of said second additional pair of springs being a function of the weight applied to the seat.

2. Compact rear-mounted device for adjusting the suspension of drivers's seats, particularly for agricultural machines, according to claim 1, characterized in that said first pair of springs (4) and said second additional pair of springs (11) are of the helical type and are arranged vertically and parallel to one another.

3. Compact rear-mounted device for adjusting the suspension of driver's seats, particularly for agricultural machines, according to claim 1, characterized in that said means for setting the level of said first cross-member are constituted by a threaded pivot (7) which is provided, at its upper end, with an actuation knob (8), said pivot being accommodated vertically so that it can rotate in the upper portion (3a) of the main frame (3), a complementarily threaded nut/sleeve (9) engaging said pivot and being rigidly supported by said first cross-member (5), the rotation of said pivot being suitable to cause the lifting or lowering of said first cross-member (5).

4. Compact rear-mounted device for adjusting the suspension of driver's seats, particularly for agricultural machines, according to claim 1, characterized in that said engagement elements (13) for the coupling between said second (10) and third (12) cross-members are constituted by at least one hook (14) whose base (14a) is articulated to the second cross-member (10) about a horizontal axis and whose upper pawl (14b) is suitable to engage a corresponding slot (15) defined in the third cross-member (12), said hook being moved by virtue of related actuation devices (16).

5. Compact rear-mounted device for adjusting the suspension of driver's seats, particularly for agricultural machines, according to claim 4, characterized in that said actuation devices (16) for moving the hook (14) comprise an actuation rod (17) one (17a) of whose ends is articulated to the base (14a) of the hook, the opposite end (17b) being articulated to the rotation fulcrum (18) of an eccentric element (19) which can be rotatably actuated by means of an actuation lever (20) which extends out of the device, with the interposition of elastic means (21) for maintaining the position of the eccentric element.

## Patentansprüche

1. Kompakte hinten angebrachte Vorrichtung (1) zur Einstellung der Aufhängung von Fahrersitzen (2), insbesondere für Landwirtschaftsmaschinen, die einen Hauptrahmen (3) aufweist, der in entsprechenden Führungen in Gegenwirkung zu einem ersten Paar von Federn (4) vertikal gleitbar ist, deren (4) ersten Enden an einem ersten, oberen Querglied (5) angreifen und deren (4) zweiten Enden an einem zweiten Querglied (10) angreifen, das zu dem ersten Querglied parallel ist, **dadurch gekennzeichnet,** daß das erste, obere Querglied (5) mittels entsprechender Einstellmittel (6) in einstellbaren Höhen anzuordnen ist und daß das zweite Querglied (10) mit dem Sitz starr verbunden ist, die Enden von mindestens einem zweiten zusätzlichen Paar von Federn (11) weiterhin an dem ersten Querglied (5) angreifen, das zweite Paar von Federn parallel zu den ersten Federn ist, die entgegengesetzten Enden des zweiten Paares von Federn an einem dritten Querglied (12) angreifen, das parallel zu dem ersten ist und damit mittels entsprechender Eingriffselemente (13) angreifend verbindbar ist, und die Einwirkung des zusätzlichen zweiten Paares von Federn eine Funktion des auf den Sitz aufgebrachten Gewichtes ist.

2. Kompakte hinten angebrachte Vorrichtung zur Einstellung der Aufhängung von Fahrersitzen, insbesondere für Landwirtschaftsmaschinen, nach Anspruch 1, **dadurch gekennzeichnet,** daß das erste Paar von Federn (4) und das zweite zusätzliche Paar von Federn (11) von der wendelförmigen Art sind und vertikal sowie parallel zueinander angeordnet sind.

3. Kompakte hinten angebrachte Vorrichtung zur Einstellung der Aufhängung von Fahrersitzen, insbesondere für Landwirtschaftsmaschinen, nach Anspruch 1, **dadurch gekennzeichnet,** daß die Mittel zur Einstellung der Höhe des ersten Querglieds von einer Gewinde-Spindel (7) dargestellt sind, die an ihrem oberen Ende mit einem Betätigungsknopf (8) versehen ist, die Spindel vertikal untergebracht ist, so daß sie sich im oberen Teil (3a) des Hauptrahmens (3) drehen kann, eine ergänzend mit Gewinde versehene Mutter/Hülse (9) an der Spindel angreift und von dem ersten Querglied (5) starr getragen ist und die Drehung der Spindel zur Verursachung des Abhebens und Absenkens des ersten Querglieds (5) geeignet ist.

4. Kompakte hinten angebrachte Vorrichtung zur Einstellung der Aufhängung von Fahrersitzen, insbesondere für Landwirtschaftsmaschinen, nach Anspruch 1, **dadurch gekennzeichnet**, daß die Eingriffselemente (13) für die Kupplung zwischen den zweiten (10) und dritten (12) Quergliedern von mindestens einem Haken (14) dargestellt sind, dessen Unterteil (14a) um eine horizontale Achse drehbar an das zweite Querglied (10) gelenkt ist und dessen obere Sperrklinke (14b) zum Angreifen an einem entsprechenden, in dem dritten Querglied (12) vorgesehenen Schlitz (15) geeignet ist, und der Haken mittels einer entsprechenden Betätigungseinrichtung (16) bewegt wird.

5. Kompakte hinten angebrachte Vorrichtung zur Einstellung der Aufhängung von Fahrersitzen, insbesondere für Landwirtschaftsmaschinen, nach Anspruch 4, **dadurch gekennzeichnet**, daß die Betätigungseinrichtung (16) zum Bewegen des Hakens (14) eine Betätigungsstange (17) aufweist, deren eines Ende (17a) an dem Unterteil (14a) des Hakens angelenkt ist und dessen entgegengesetztes Ende (17b) an dem Drehpunkt (18) eines Exzenterelements (19) angelenkt ist, das mittels eines Betätigungshebels (20) drehend betätigbar ist, der unter Zwischenschaltung eines elastischen Mittels (21) zwecks Einhaltung der Stellung des Exzenterelements sich aus der Vorrichtung heraus erstreckt.

## Revendications

1. Dispositif compact (1) monté à l'arrière pour le réglage de la suspension de sièges de conducteur (2), en particulier pour des machines agricoles, comprenant un châssis principal (3), qui peut être coulissé verticalement dans des guides associés par rapport à une première paire de ressorts (4), les premières extrémités de ladite première paire de ressorts (4) étant en prise avec un premier élément transversal supérieur (5) et les deuxièmes extrémités de la première paire de ressorts (4) étant en prise avec un deuxième élément transversal (10) qui est parallèle audit premier élément transversal, caractérisé en ce que ledit premier élément transversal supérieur (5) peut être placé à des niveaux réglables sous l'effet de moyens de réglage associés (6) et en ce que ledit deuxième élément transversal (10) est associé de manière rigide au siège, les extrémités d'au moins une seconde paire de ressorts (11) supplémentaires étant, de plus, en prise avec ledit premier élément transversal (5), ladite deuxième paire de ressorts étant parallèle auxdits premiers ressorts, les extrémités opposées de ladite deuxième paire de ressorts étant en prise avec un troisième élément transversal (12) qui est parallèle au deuxième et qui peut se mettre en prise avec celui-ci au moyen d'éléments d'engagement associés (13), l'intervention de ladite deuxième paire de ressorts supplémentaires étant fonction du poids appliqué au siège.

2. Dispositif compact monté à l'arrière pour le réglage de la suspension de sièges de conducteur, en particulier pour des machines agricoles, selon la revendication 1, caractérisé en ce que ladite première paire de ressorts (4) et ladite deuxième paire de ressorts (11) supplémentaires sont de type hélicoïdal et sont placées verticalement et parallèlement l'une à l'autre.

3. Dispositif compact monté à l'arrière pour le réglage de la suspension de sièges de conducteur, en particulier pour des machines agricoles, selon la revendication 1, caractérisé en ce que lesdits moyens de réglage du niveau dudit premier élément transversal sont constitués par un pivot fileté (7) qui est muni, à son extrémité supérieure, d'un bouton d'actionnement (8), ledit pivot étant placé verticalement, de sorte qu'il peut tourner dans la portion supérieure (3a) du châssis principal (3), un écrou/une douille fileté(e) complémentaire (9) se mettant en prise sur ledit pivot et étant soutenu(e) rigidement par ledit premier élément transversal (5), la rotation dudit pivot convenant pour provoquer le soulèvement ou l'abaissement dudit premier élément transversal (5).

4. Dispositif compact monté à l'arrière pour le réglage de la suspension de sièges de conducteur, en particulier pour des machines agricoles, selon la revendication 1, caractérisé en ce que lesdits éléments d'engagement (13) pour l'accouplement entre lesdits deuxième (10) et troisième (12) éléments transversaux sont constitués par au moins un crochet (14) dont la base (14a) est articulée sur le deuxième élément transversal (10) autour d'un axe horizontal et dont le cliquet supérieur (14b) convient pour se mettre en prise dans une fente correspondante (15) définie dans le troisième élément transversal (12), ledit crochet étant déplacé au moyen de dispositifs d'actionnement (16) associés.

5. Dispositif compact monté à l'arrière pour le réglage de la suspension de sièges de conducteur, en particulier pour des machines agricoles, selon la revendication 4, caractérisé en ce que lesdits moyens d'actionnement (16) pour déplacer le crochet (14) comprennent une tige d'actionnement (17) dont l'une (17a) des extrémités est articulée sur la base (14a) du crochet, l'extrémité opposée (17b) étant articulée sur le point d'appui en rotation (18) d'un élément excentrique (19) qui peut être actionné en rotation au moyen d'un levier d'actionnement (20) qui s'étend à l'extérieur du dispositif, avec interposition de moyens élastiques (21) destinés à maintenir la position de l'élément excentrique.
